# FASCICULE DE BREVET EUROPEEN

(11) **EP 4 313 563 B1**
(45) Date de publication et mention de la délivrance du brevet: **14.10.2026**
(21) Numéro de dépôt: 22715138.8
(22) Date de dépôt: 22.03.2022
(51) Int. Cl.: B29C 70/52, E04C 5/07, E04G 21/12, E04G 23/02

(54) **DISPOSITIF DE RENFORCEMENT DE TYPE ANCRAGE ET PROCEDE DE FABRICATION ASSOCIE**
VERANKERUNGSARTIGE VERSTÄRKUNGSVORRICHTUNG UND ZUGEHÖRIGES HERSTELLUNGSVERFAHREN
ANCHORAGE-TYPE REINFORCING DEVICE AND RELATED MANUFACTURING METHOD

(30) Priorité: 25.03.2021 FR 2103033
(43) Date de publication de la demande: 07.02.2024
(73) Titulaire: Epsilon Composite, 33340 Gaillan-en-Médoc (FR)
(72) Inventeur: PORTOLES, José, 33340 Queyrac (FR)
(74) Mandataire: Novagraaf Technologies
(86) Numéro de dépôt international: PCT/FR2022/050521
(87) Numéro de publication internationale: WO 2022/200727

(56) Documents cités:
- GB-A- 2 081 638
- JP-A- 2006 205 519
- US-A1- 2015 204 075

## Description

### Domaine technique de l'invention

L'invention concerne de manière générale le domaine du renforcement de structures de construction, et en particulier dans le domaine du génie civil.

### Arrière-plan technique

Il existe deux générations d'ancrage dans le domaine du génie civil. Les ancrages de première génération sont simplement des fibres sèches, tandis que les ancrages de seconde génération présentent une partie rigide composite de forme allongée constituée de fibres de renfort continues imprégnées et liées entre elles par une matrice polymérique et une partie souple reliée à l'une des extrémités de la partie rigide et constituée des extrémités libres et sèches desdites fibres de renfort.

Par fibres sèches, on entend, au sens de la présente invention, des fibres de renfort ensimées, traditionnellement utilisées dans la mise en œuvre des matériaux composites, non encore imprégnées et enrobées dans la matrice polymère traditionnellement utilisée pour constituer un matériau composite constitué de fibres de renfort dans une matrice polymère.

Par fibres ensimées, on entend, au sens de la présente invention, des fibres qui ont été soumises à un traitement lors de leur fabrication par adjonction d'un ensimage en vue d'améliorer leurs propriétés physicochimiques. L'ensimage est une dispersion aqueuse spécifique comportant par exemple un agent collant et/ou un agent pontant et/ou des agents antistatiques, permettant d'assurer différents rôles :
- compatibilité et renforcement de la liaison entre les fibres et la matrice polymère,
- augmentation des performances en fatigue et dynamique du matériau composite ainsi formé constitué de fibres de renfort dans une matrice polymère,
- augmentation des performances en tenue au vieillissement chimique, humide et thermique,
- cohésion interfilamentaire (raideur de la fibre sèche) pour que les fibres sèches soient manipulables,
- protection contre l'abrasion générée lors la mise en œuvre des matériaux composites
- élimination des charges électrostatiques dues aux frottements,
- augmentation du mouillage des fibres au cours de l'imprégnation,

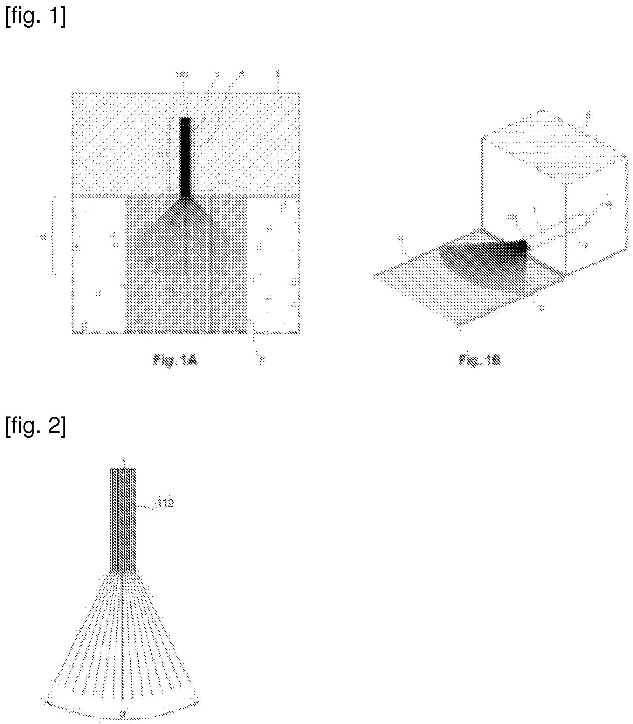

Typiquement, ces ancrages dits de seconde génération sont mis en place de la manière suivante pour sécuriser des ouvrages d'art en génie civil, notamment en béton armé (comme illustré sur la figure 1 commentée ci-après dans la description détaillée des figures :
- préparation du béton par perçage et nettoyage ;
- collage de la partie rigide en matériau composite dans le perçage ;
- imprégnation de la partie non polymérisée (fibres sèches) et application sur le renfort en surface de l'ouvrage d'art,
- polymérisation *in-situ* de l'ensemble.

En ce qui concerne les ancrages de seconde génération, il est connu de l'homme du métier une première technologie de fabrication consistant à réaliser un renfort rigide de forme allongée et imprégné de résine que l'on dépolymérise partiellement par pyrolyse. Ainsi, le brevet européen EP3069859 enseigne notamment la fabrication d'un produit semi-fini constitué d'un profilé pultrudé constitué d'un faisceau de fibres en carbone, verre, aramide (notamment connues sous l'appellation commerciale Kevlar^{®}) imprégnées de résines, par exemple de type époxy ou vinyle, que l'on découpe en barres. Celles-ci sont ensuite partiellement dépolymérisées par un traitement à température élevée puis lavées à l'aide de solvant et/ou d'acides pour libérer complètement les fibres de la résine. De même, la demande de brevet européen EP2295675 enseigne la fabrication d'un élément de renforcement d'une structure de construction comprenant la formation d'un profilé pultrudé, extrudé ou moulé, qui est constitué d'un faisceau de fibres en carbone, en verre ou en basalte, ou en aramide, imprégnées d'une matrice polymérique à base de résines thermodurcissable de type époxy ou d'un polymère thermoplastique. A l'issue de la réalisation du profilé rigide, la matrice polymérique est ensuite éliminée d'une extrémité du profilé rigide, par exemple par un traitement de pyrolyse à une température comprise entre 800°C et 1500°C. Dans ce cas, afin d'éviter la propagation de la chaleur et de limiter l'élimination de la matrice polymérique à la partie du profilé dont on souhaite libérer les fibres, il est nécessaire de protéger l'autre partie du profilé en la soumettant à un refroidissement, par exemple par pulvérisation d'un gaz froid. La demande de brevet européen EP2295675 enseigne toutefois qu'il est également possible d'éliminer partiellement la matrice polymérique par dissolution chimique sélective.

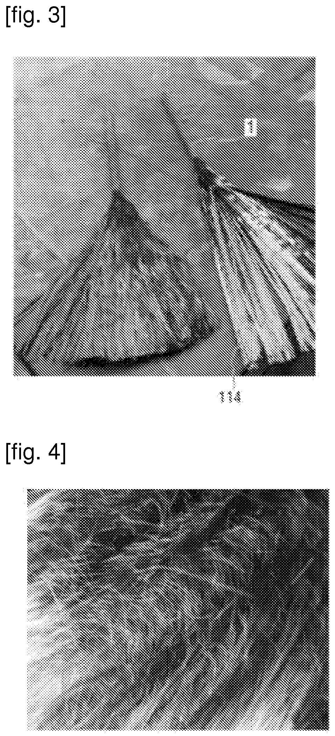

Cette première technologie de fabrication permet d'obtenir des éléments de renforcement comprenant une partie rigide constitué d'un profilé imprégné, qui est obtenu par un procédé industriel continu ou discontinu, avec des couts de production très faibles. Le profilé ainsi obtenu présente un faible taux de porosité (notamment inférieur à 2%) et un taux élevé de fibres, qui présentent un alignement optimisé grâce à un prétentionnement pendant l'imprégnation et pendant la cuisson. Cela permet d'obtenir des performances mécaniques élevées et reproductibles. Toutefois, la partie dépolymérisée par pyrolyse et/ou solvatation de ces éléments de renforcement présentent plusieurs inconvénients :
- génération de fumées toxiques et utilisation de solvants, ce qui occasionnent des risques environnementaux certains,
- destruction de l'ensimage originel des fibres, qui permet typiquement d'assurer une bonne liaison avec l'élément de construction que l'élément de renfort vient renforcer, ainsi qu'une bonne tenue au vieillissement du matériau composite qui sera ainsi formé sur le chantier par imprégnation des fibres libres disposées sur l'élément de renfort, ce qui entraine par conséquence
- une atténuation de la facilité d'imprégnation sur chantier des fibres ayant perdu leur ensimage,
- lors de la pyrolyse, endommagement partiel de la fibre, en particulier s'il s'agit d'une fibre de carbone par création chimique de dioxyde de carbone,
- séparation des fibrilles constitutives des fibres (comme illustré par la figure 4) provoquant un désalignement de ces fibrilles, et par voie de conséquence une diminution des performances mécaniques de l'élément de construction lors de la réimprégnation sur chantier et une augmentation du volume apparent de l'ancrage (ou élément de renfort), ce qui pose un problème pour le stockage en vue du transport.

Par ailleurs, une deuxième technologie de fabrication consiste à réaliser des ancrages de deuxième génération pour lesquels la partie rigide composite est obtenue par moulage de fibres de carbone imprégnées, alors que la partie souple constituée des extrémités libres de ces fibres n'est pas imprégnée dans le moule. Un tel procédé de fabrication est décrit dans le brevet américain US°9,784,004. Il s'agit d'un procédé unitaire, réalisé en atelier et qui aboutit à des ancrages présentant une partie rigide préformée au diamètre et à la longueur souhaitée et au moins une partie souple à l'extrémité de cette partie rigide et constituée de fibres (ou mèches) libres pouvant être répartis et collées avec une matrice polymérique, sur la structure à renforcer. Cette technologie permet d'obtenir pour la partie souple non imprégnée des fibres libres non endommagées, c'est-à-dire des fibres présentant le taux d'ensimage initial des fibres de renfort préalablement à leur traitement de moulage pour réaliser la partie rigide. En outre l'alignement des fibrilles constituant les fibres de la partie souple sont maintenues alignées lors de la fabrication de ces ancrages. En contrepartie, le procédé de moulage de la partie rigide présente plusieurs désavantages au niveau du produit :
- il s'agit d'un procédé de moulage individuel avec des taux de fibres dans la partie rigide inférieurs ou égaux à 56 % en volume,
- comme il s'agit d'un procédé de moulage, cela induit un risque important de porosité dans la partie rigide, notamment supérieur à 2%,
- enfin, il n'y a pas de garantie de l'alignement des fibres lors de la fabrication de la partie rigide dans le moule par polymérisation *in-situ.* En effet, le procédé de fabrication tel qu'enseigné par US°9,784,004 n'est pas prévu pour maintenir en tension les fibres de renfort. Ce désalignement des fibres a un impact pouvant s'évaluer à une diminution des performances de résistance en traction de la partie rigide qui est supérieure à 10% par rapport aux performances que l'on obtiendrait sans désalignement des fibres. Il en est de même pour les performances de résistance en compression et de résistance en flexion.

L'ensemble de ces facteurs induit une faible reproductibilité des performances mécaniques de ce type d'ancrages sur la partie rigide.

GB2081638A divulgue un dispositif de renforcement selon le préambule de la revendication 1.

### Exposé de l'invention

Afin de pallier les inconvénients précités, notamment en vue de maintenir l'ensimage originel des extrémités libres des fibres de renfort tout en garantissant l'alignement des fibres et un taux de porosité très faible lors de la fabrication de la partie rigide et donc des performances mécaniques élevées de la partie rigide, le demandeur a mis au point un dispositif de renforcement comprenant :
- une partie rigide composite comprenant des fibres de renfort continues imprégnées et liées entre elles par une matrice polymérique, cette partie rigide possédant les mêmes propriétés qu'un profilé classique obtenu par pultrusion, et
- une partie souple constituée par les extrémités libres des fibres de renfort, ces dernières prolongeant l'une au moins des première et deuxième extrémités de la partie rigide composite.

Plus particulièrement, la présente invention a pour objet un dispositif de renforcement de type ancrage comprenant :
- au moins une partie rigide composite de forme allongée comprenant une première extrémité et une deuxième extrémité, la partie rigide composite comprenant au moins un faisceau de fibres de renfort continues et une matrice polymérique imprégnant les fibres de renfort et les liant entre elles, et
- au moins une partie souple constituée par des extrémités libres des fibres de renfort, lesdites extrémités libres des fibres de renfort prolongeant l'une au moins des première et deuxième extrémités de la partie rigide composite,
ledit dispositif de renforcement étant caractérisé en ce que le pourcentage volumique des fibres de renfort dans la partie rigide composite est supérieur à 56 % en volume, et en ce que les extrémités libres des fibres de renfort sont ensimées et présentent un taux d'ensimage compris entre 0,25% et 2% en poids, et de préférence entre 0,3% et 1,5% en poids des extrémités libres des fibres de renfort.

Un tel taux d'ensimage des extrémités libres desdites fibres de renfort correspond sensiblement au taux d'ensimage initial des fibres de renfort préalablement à leur utilisation.

Par extrémités libres des fibres, on entend, au sens de la présente invention, les parties prolongeant les fibres de carbone sortant de la partie rigide, ces parties n'étant pas imprégnées de matrice polymérique étant aptes à se déployer librement hors de la partie rigide.

A titre de fibres de renfort, on pourra avantageusement utiliser dans le cadre de la présente invention des fibres de carbone, verre, aramide ou Kevlar^{®}, ou toutes autres fibres connues pour la réalisation des matériaux composite. Les fibres de renfort préférées sont des fibres de carbone.

De manière avantageuse, les extrémités libres des fibres de renfort peuvent se présenter, lorsqu'elles se déploient librement sous leur propre poids, sous une forme essentiellement allongée circonscrite dans les limites d'un éventail dont l'écartement forme un angle α d'au plus 40°, et préférentiellement entre 20° et 40°.

De manière avantageuse, le pourcentage volumique des fibres de renfort dans ladite partie rigide composite peut être compris entre 60% et 75% en volume.

De manière avantageuse, le taux de porosité de la partie rigide composite peut être inférieur à 2%. Un tel taux de porosité permet d'améliorer les performances en fatigue et vieillissement de la partie rigide composite.

De manière avantageuse, la matrice polymérique peut comprendre un polymère thermodurcissable à titre de constituant principal de ladite matrice polymérique. A titre de polymères thermodurcissables utilisable dans le cadre de la présente invention, on peut notamment citer les polyesters, les époxydes (EP), les vinylesthers, les vitrimères et leurs mélanges.

De manière avantageuse, la matrice polymérique peut comprendre un polymère thermoplastique à titre de constituant principal de ladite matrice polymérique. A titre de polymères thermoplastiques utilisable dans le cadre de la présente invention, on peut notamment citer les polyamides (PA), les polyimides (PI), le poly(sulfure de phénylène (PPS), les polypropylènes (PP), les polycétones (PK) les polyétheréthercétones (PEEK), les polyestherccarbonates (PEC), les polyaryléthercétones (PEAK), le poly(méthacrylate de méthyle) (PMMA), les polyamide-imides (PAI), les polyéthylènes (PE, PE-HD, PE-LD, PE-LLD), et leurs mélanges.

Le dispositif de renforcement selon l'invention peut comprendre au moins une alternance de parties rigides composites et de parties souples.

La présente invention a également pour objet l'utilisation du dispositif de renforcement selon l'invention comme élément de renforcement de construction, notamment dans des applications de génie civil (par exemple comme ancrage).

Toutefois, le dispositif de renforcement selon l'invention peut également être utilisé dans de nombreux autres domaines (ancrages de haubans, poutre treillis, jonction entre tubes, bielles de structure, par exemple). En d'autres termes, le dispositif de renforcement selon l'invention peut potentiellement être utilisé comme renfort s'appliquant à tous types de sections de profilé en matériaux composites.

La présente invention a également pour objet un procédé de fabrication d'un dispositif de renforcement selon l'invention, le procédé comprenant les étapes suivantes :
A) déroulement sous tension dans le sens de la longueur de fibres de renfort ensimées afin de les aligner dans une direction déterminée ; le déroulement étant réalisé à l'aide d'un système de tractation pour tracter lesdites fibres de renfort ensimées de manière continue ou discontinue ;
B) imprégnation de manière discontinue desdites fibres de renfort ensimées par une composition réactive comprenant au moins un précurseur polymère, ladite imprégnation étant réalisée de manière discontinue par dépôt sur lesdites fibres de renfort ensimées de ladite composition polymère, de manière à obtenir des fibres de renfort imprégnées de manière discontinue comprenant une alternance de parties imprégnées et de parties sèches ;
C) compactage des fibres de renfort imprégnées de manière discontinue par passage à travers au moins un œillet de calibration, pour obtenir à la sortie dudit œillet de calibration des fibres de carbone calibrées ;
D) cuisson pour polymériser lesdites fibres de renfort préalablement calibrées dans une filière de formage, pour obtenir ledit dispositif de renforcement constitué d'une alternance de parties rigides composites et de parties souples.

Dans le dispositif de renforcement selon l'invention ainsi obtenu, les parties rigides composites présentent des propriétés mécaniques équivalentes à celles d'un profilé pultrudé, tandis que les parties souples présentent les propriétés mécaniques des fibres sèches, avec une transition entre une partie rigide et une partie souple qui est nette et courte, inférieur à 5 cm et préférentiellement entre 2 et 3 cm. La cuisson peut typiquement être réalisée à des températures comprises entre 50°C et 250°C, et préférentiellement entre 100°C et 180°C.

Le temps de cuisson peut typiquement être compris entre 20 secondes à 120 secondes et préférentiellement entre 30 secondes et 90 secondes.

De manière avantageuse, le calibrage des fibres de renfort et la cuisson D) pourront être réalisées dans un seul et unique outillage consistant en ladite filière (6) de formage.

De manière avantageuse, le procédé selon l'invention peut comprendre en outre, entre les étapes d'imprégnation B) et C) de compactage, une étape d'application d'une couche de protection sur les parties imprégnées et/ou les parties sèches pour les protéger lors du passage C') dans la filière de formage. Cette couche de protection est destinée à protéger les extrémités libres des fibres contre la friction, ainsi que lors de leur cuisson où les températures élevées peuvent les endommager.

De manière avantageuse, le procédé selon l'invention peut en outre comprendre une étape de coupe en ligne du dispositif de renforcement.

### Brève descriptions des figures

D'autres avantages et particularités de la présente invention résulteront de la description qui va suivre, donnée à titre d'exemple non limitatif et faite en référence aux figures annexées et aux exemples servant à illustrer les performances mécaniques des dispositifs de renforcement conformes à la présente invention :
- [fig. 1] : la figure 1 comprend une représentation schématique en vue de dessus avec coupe partielle d'un exemple de dispositif de renforcement de type ancrage de deuxième génération mis en place pour sécuriser un ouvrage d'art en béton armé (illustrée par la partie gauche 1A de la figure 1), ainsi qu'une vue schématique en perspective de ce même exemple de dispositif de renforcement (illustrée par la partie droite 1B de la figure 1) ;
- [fig. 2] : la figure 2 représente schématiquement un exemple de dispositif de renforcement de type ancrage selon l'invention, qui est disposé verticalement de manière à se déployer librement sous son propre poids ;
- [fig. 3] : la figure 3 est une photographie montrant un exemple de dispositif de renforcement de type ancrage selon l'invention (à droite de la photographie) et un ancrage selon l'art antérieur tel qu'enseigné par le brevet européen EP3069859 (à gauche de la photographie) ;
- [fig. 4] : la figure 4 est une photographie montrant la partie souple (en particulier les extrémités libres des fibres de renfort) d'un exemple de dispositif de renforcement de type ancrage selon l'art antérieur tel qu'enseigné par le brevet européen EP3069859;
- [fig. 5] : la figure 5 est une photographie montrant la partie souple (en particulier les extrémités libres des fibres de renfort) d'un exemple de dispositif de renforcement de type ancrage selon l'invention ;
- [fig. 6] : la figure 6 est une photographie montrant un deuxième exemple de dispositif de renforcement de type ancrage selon l'invention, comprenant une partie rigide composite et deux parties souples reliées à chacune des extrémités de la partie rigide ;
- [fig. 7] : la figure 7 représente schématiquement un dispositif pour la fabrication en continu d'un exemple de dispositif de renforcement de type ancrage selon l'invention ;
- [fig. 8] : la figure 8 est une photographie montrant une éprouvette utilisée pour la première série d'essais de traction ;
- [fig. 9] : la figure 9 est une représentation schématique de la machine de traction utilisée pour la première série d'essais de traction ;
- [fig. 10] : la figure 10 est photographie montrant l'éprouvette de la figure 8 à l'issue de l'essai de traction selon la première série d'essais de traction.

Dans la description qui va suivre, des éléments identiques, similaires ou analogues seront désignés par les mêmes chiffres de référence.

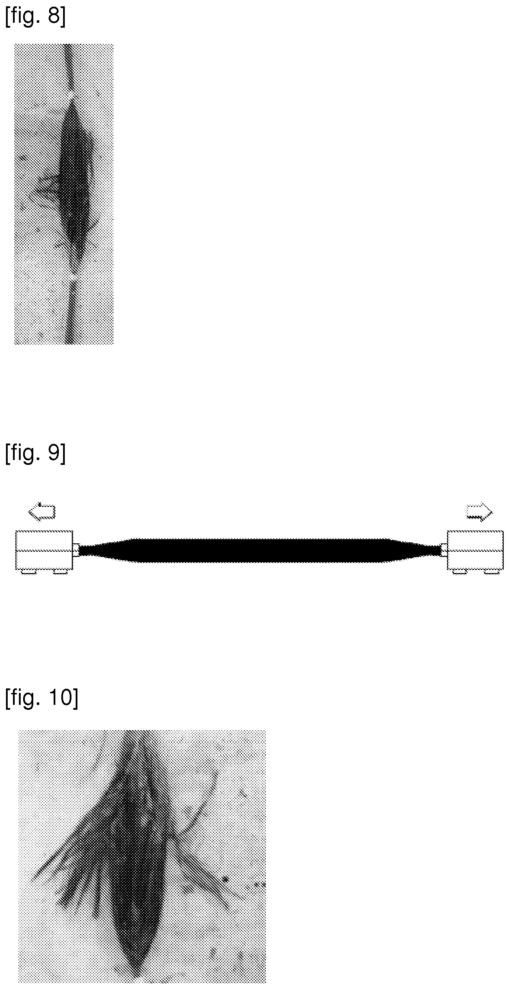

Les figures 1 à 7 sont décrites plus en détail dans la description détaillée des figures, tandis que les figures 8 à 10 seront commentées plus en détail au niveau des exemples qui suivent, qui illustrent l'invention sans en limiter la portée.

### Description détaillée des figures

La figure 1 montre schématiquement un exemple de dispositif de renforcement de type ancrage de deuxième génération mis en place pour sécuriser un ouvrage d'art en béton armé, ce dispositif pouvant être notamment un dispositif de renforcement 1 de type ancrage selon l'invention comprenant une partie rigide composite 11 de forme allongée comprenant deux extrémités 110, 111, et une partie souple 12 reliée à l'une des extrémités 111 et constituée des extrémités libres 114 des fibres de renfort 112 (c'est-à-dire les parties prolongeant les fibres de carbone sortant de la partie rigide et qui ne sont pas imprégnées de matrice polymérique). La figure 1, qui a été décrite dans l'art antérieur qui précède, montre en particulier comment un dispositif de renforcement de type ancrage de deuxième génération est mis en place ;
- préparation du béton B par création d'un perçage P et nettoyage du perçage ainsi créé ;
- collage de la partie rigide composite 11 précuite dans le perçage P nettoyé ;
- imprégnation de la partie souple 12 non polymérisée (fibres sèches) et application des extrémités libres 114 des fibres de renfort 112 sur le renfort R positionné en surface de l'ouvrage d'art,
- polymérisation in-situ de l'ensemble.

Sur la figure 2 est représenté un exemple de dispositif de renforcement 1 de type ancrage selon l'invention, qui est disposé verticalement de manière à se déployer librement sous son propre poids. La figure 2 montre en particulier que cet exemple de dispositif de renforcement 1 de type ancrage selon l'invention présente les mêmes caractéristiques structurelles que le dispositif de renforcement de deuxième génération représenté sur la figure 1, ainsi que l'aptitude des extrémités libres 114 des fibres de renfort 112 à présenter une forme essentiellement allongée circonscrite dans les limites d'un éventail dont l'écartement α d'au plus 40° et préférentiellement entre 20° et 40°.

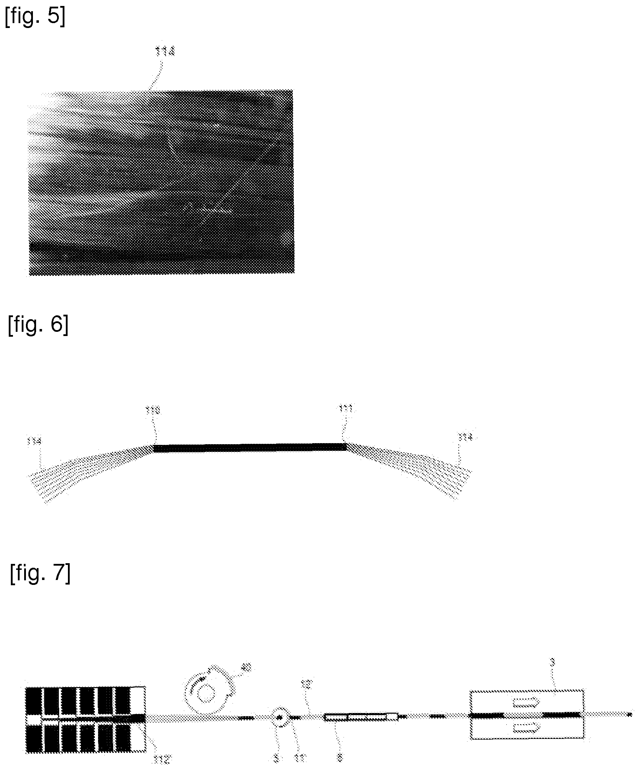

La figure 3 est une photographie montrant un exemple de dispositif de renforcement 1 de type ancrage selon l'invention (à droite de la photographie) et un ancrage selon l'art antérieur tel qu'enseigné par le brevet européen EP3069859 (à gauche de la photographie). Cette figure montre clairement que les extrémités libres 114 des fibres de renfort 112 ne sont pas endommagées et restent bien alignées dans le dispositif de renforcement 1 de type ancrage selon l'invention, en restant contenues dans un volume apparent plus faible que pour l'ancrage selon l'art antérieur (ceci est également illustré par la figure 5). En outre, pour ce dernier, on constate un désalignement des fibrilles à la surface des fibres de carbone (ceci est également illustré par la figure 4).

la figure 6 est une photographie montrant un deuxième exemple de dispositif de renforcement de type ancrage selon l'invention, comprenant une partie rigide composite 11 et deux parties souples 12 reliées à chacune des extrémités de la partie rigide. La figure 6 montre clairement que les extrémités libres 114 des fibres de renfort 112 ne sont pas endommagées et conservent l'ensimage initial des fibres avant leur traitement, et qu'elles se déploient librement dans un volume restreint.

Enfin, le processus de fabrication en continu du dispositif de renforcement 1 selon l'invention est illustré sur la figure 7. Il comporte les étapes suivantes :
- A) déroulement sous tension dans le sens de la longueur de fibres de renfort ensimées 112' afin de les aligner dans une direction déterminée ; le déroulement étant réalisé à l'aide d'un système de tractation 3 (par exemple un tracteur ou un palan) pour tracter les fibres de renfort ensimées 112' de manière continue ou discontinue et obtenir un alignement parfait des fibres de renfort ensimées 112' ;
- B) imprégnation de manière discontinue desdites fibres de renfort ensimées 112' par une composition réactive 40 comprenant au moins un précurseur polymère, ladite imprégnation étant réalisée de manière discontinue par dépôt sur lesdites fibres de renfort ensimées 112 de la composition polymère, de manière à obtenir des fibres de renfort imprégnées de manière discontinue 113 comprenant une alternance de parties imprégnées 11' et de parties sèches 12'; cette étape d'imprégnation est maîtrisée et ajustable en fonction de la longueur des fibres que l'on souhaite imprégner, et elle est réalisée par exemple à l'aide d'un cliché de transfert de manière similaire à une impression offset ou flexographie ; ou par exemple par immersion temporaire des fibres dans un bain d'imprégnation contenant la matrice 40, pour déposer la quantité calibrée de matrice nécessaire à l'imprégnation des fibres sur la zone définie.
- C) compactage des fibres de renfort imprégnées de manière discontinue 113 par passage à travers au moins un œillet de calibration 5 (ou œillet d'essorage) pour obtenir à la sortie des fibres de carbone calibrées ; l'œillet est dimensionné en section pour avoir une section d'au plus égale à la section de l'ensemble des fibres de renfort non imprégnées divisée par au moins 50%, de sorte qu' à l'issue de cette étape, on obtient un pourcentage volumique des fibres de renfort dans la section imprégnée des fibres supérieur à 50 % en volume ;

- C') calibrage des fibres de renfort dans une filière de formage 6 ; la section de la filière 6 est dimensionnée en section pour avoir une section d'au plus égale à la section de l'ensemble des fibres de renfort non imprégnées divisée par au moins 56%, de sorte qu'à l'issue de cette étape, on obtient un pourcentage volumique des fibres de renfort dans la section imprégnée des fibres supérieur à 56 % en volume ;
- D) cuisson dans la filière de formage 6 des fibres de renfort préalablement calibrées pour les polymériser, pour obtenir le dispositif de renforcement 1 constitué d'une alternance de parties rigides composites 11 et de parties souples 12.

Si l'œillet est dimensionné en section pour avoir une section d'au plus égale à la section de l'ensemble des fibres de renfort non imprégnées divisée par 60% et la section de la filière 6 est dimensionnée en section pour avoir une section d'au plus égale à la section de l'ensemble des fibres de renfort non imprégnées divisée par 75%, on obtient un pourcentage volumique des fibres de renfort 112 dans la partie rigide composite 11 de 75% en volume.

De manière avantageuse, le procédé selon l'invention peut comprendre en outre, entre les étapes d'imprégnation et de compactage, une étape B') d'application d'une couche de protection sur les parties imprégnées 11' et/ou les parties sèches 12' pour les protéger lors du passage dans la filière de formage 6 . Cette couche de protection est destinée à protéger les extrémités libres des fibres contre la friction, ainsi que lors de leur cuisson où les températures élevées peuvent les endommager. Cette couche de protection peut également être destinée à créer un aspect rugueux lors de son arrachement de la partie rigide, préalablement à l'installation sur chantier.

De manière avantageuse, le procédé selon l'invention peut en outre comprendre une étape de coupe en ligne pouvant résulter en un dispositif de renforcement comprenant une ou plusieurs parties imprégnées 11' et une ou plusieurs parties sèches 12'.

### EXEMPLE

### Dispositifs de renforcement testés

On teste les performances mécaniques en traction du dispositif de renforcement selon l'invention, en réalisant les éprouvettes de traction suivantes :
- une première éprouvette E1 de dispositif de renforcement 1 selon l'invention, qui comporte une partie souple 12 entre deux parties rigides composites 11 de 9,5 mm de diamètre, comme illustré sur la figure 8, chacune des parties rigides composites comportant environ entre 68% et 70% en volume de fibres de carbone (éprouvette de la première série d'essais de traction) ;
- une deuxième éprouvette E2 de dispositif de renforcement 1 selon l'invention, constituée uniquement de la partie rigide composite 11 de 9,5 mm de diamètre et comportant également environ entre 68% et70% en volume de fibres de carbone (éprouvette de la deuxième série d'essais de traction).

### Description des tests réalisés

On réalise une première série d'essais de traction dans lesquels :
- chacune des parties rigides composites 11 de l'éprouvette E1 est placée entre les mâchoires d'une machine de traction, comme illustré sur la figure 9 ;
- Cette machine de traction tire sur la partie souple 12 jusqu'à sa rupture, comme illustré sur la figure 10, et on enregistre la valeur de la résistance à la rupture (cf. tableau 1).

Cette valeur de résistance à la rupture mesurée est comparée (dans le tableau 1) aux résultats de tests identiques (résultats comparatifs) réalisés :
- d'une part sur des exemples EC1 de dispositif de renforcement connus de l'homme de l'art et commercialisés sous la dénomination commerciale Mapewrap C Fiocco par la société Mapei (avec des parties rigides composites de 12 mm de diamètre), et
- d'autre part sur des exemples EC2 de dispositif de renforcement connus de l'homme de l'art et commercialisés sous la marque déposée Foreva^{®} WFC 100 par la société Freyssinet, dont le diamètre des parties rigides varie entre 14 mm, 17 mm et 20 mm.
Ces résultats comparatifs sont disponibles dans les Avis Techniques (usuellement connus sous l'acronyme ATec) formulés par un groupe d'experts des sociétés commercialisant ces dispositifs de renforcement commerciaux, ces ATec étant par ailleurs validés par le CSTB (acronyme français désignant le Centre Scientifique et Technique du Bâtiment).

**[Table 1]**

| EXEMPLES | Diamètre de la partie rigide composite du renfort (mm) | Résistance à la rupture (kN) |
|---|---|---|
| EC1 (ATec) | 12 | 42,2 |
| EC2 (ATec) | 14 | 40 |
| | 17 | 42 |
| | 20 | 80 |
| E1 (mesure) | 9,5 | 100 |

Le tableau 1 montre qu'à diamètre sensiblement équivalent (comparaison d'EC1 et E1 notamment), le dispositif de renforcement selon l'invention est plus de deux fois performant (en traction, valeur de la résistance à la rupture plus de deux fois supérieure).

On réalise une deuxième série d'essais de traction, qui sont des essais de traction simples dans lesquels l'éprouvette E2 est placée entre les mâchoires d'une machine de traction classique, qui tire sur la partie rigide 11 jusqu'à sa rupture, et on enregistre la valeur de la contrainte à la rupture (cf. tableau 2)

Cette valeur de contrainte à la rupture mesurée est comparée (dans le tableau 2) aux résultats de tests identiques réalisés sur un exemple EC3 de dispositif renforcement connu de l'homme de l'art et commercialisé sous la dénomination commerciale Linker par la société Carboneveneta ; EC3 étant constituée uniquement de la partie rigide composite 11 de 10 mm de. Ces résultats comparatifs sont également disponibles dans les Avis Techniques et validés par le CSTB.

**[Table 2]**

| EXEMPLES | Diamètre du renfort (mm) | Contrainte à la rupture (Mpa) |
|---|---|---|
| EC3 | 10 | 2299 |
| E2 | 9,5 | 3000 |

Le tableau 3 montre qu'à diamètre sensiblement équivalent, la contrainte à la rupture de la partie rigide composite du dispositif de renforcement selon l'invention est supérieure de plus de 30% à celle que l'on obtiendrait avec le dispositif de renforcement commercialisé par la Carboneveneta.

## Revendications

1. Dispositif de renforcement (1) de type ancrage comprenant :
- au moins une partie rigide composite (11) de forme allongée comprenant une première extrémité (110) et une deuxième extrémité (111), ladite partie rigide composite (11) comprenant au moins un faisceau de fibres de renfort (112) continues et une matrice polymérique (113) imprégnant lesdites fibres de renfort (112) et les liant entre elles, et
- au moins une partie souple (12) constituée par des extrémités libres (114) desdites fibres de renfort, lesdites extrémités libres prolongeant l'une au moins des première et deuxième extrémités de la partie rigide composite (11),
ledit dispositif de renforcement (1) étant **caractérisé en ce que** le pourcentage volumique desdites fibres de renfort (112) dans ladite partie rigide composite (11) est supérieur à 56 % en volume, et
**en ce que** lesdites extrémités libres desdites fibres de renfort (112) sont ensimées et présentent un taux d'ensimage compris entre 0,25% et 2% en poids, et de préférence entre 0,3% et 1,5% en poids desdites extrémités libres (114) des fibres de renfort (112).

2. Dispositif de renforcement (1) selon la revendication 1, selon lequel lesdites extrémités libres (114) des fibres de renfort (112) se présentent, lorsqu'elles se déploient librement sous leur propre poids, sous une forme essentiellement allongée circonscrite dans les limites d'un éventail dont l'écartement forme un angle α d'au plus 40° et préférentiellement entre 20° et 40°.

3. Dispositif de renforcement (1) selon l'une quelconque des revendications 1 et 2, dans lequel le pourcentage volumique desdites fibres de renfort (112) dans ladite partie rigide composite (11) est compris entre 60% et 75% en volume.

4. Dispositif de renforcement (1) selon l'une quelconque des revendications 1 à 3, dans lequel ladite matrice polymérique (113) comprend un polymère thermodurcissable à titre de constituant principal de ladite matrice polymérique (113).

5. Dispositif de renforcement (1) selon l'une quelconque des revendications 1 à 3, dans lequel ladite matrice polymérique (113) comprend un polymère thermoplastique à titre de constituant principal de ladite matrice polymérique (113).

6. Dispositif de renforcement (1) selon l'une quelconque des revendications 1 à 5, dans lequel lesdites fibres de renfort (112) sont des fibres de carbone.

7. Dispositif de renforcement (1) selon l'une quelconque des revendications 1 à 6, comprenant au moins une alternance de parties rigides composites (11) et de parties souples (12).

8. Utilisation du dispositif de renforcement (1) selon l'une quelconque des revendications 1 à 7 comme élément de renforcement de construction.

9. Procédé de fabrication d'un dispositif de renforcement (1) tel que défini selon l'une quelconque des revendications 1 à 7, ledit procédé comprenant les étapes suivantes :
A) déroulement sous tension dans le sens de la longueur de fibres de renfort ensimées (112') afin de les aligner dans une direction déterminée ; le déroulement (100) étant réalisé à l'aide d'un système de tractation (3) pour tracter lesdites fibres de renfort ensimées (112') de manière continue ou discontinue ;
B) imprégnation de manière discontinue desdites fibres de renfort ensimées (112') par une composition réactive (40) comprenant au moins un précurseur polymère, ladite imprégnation étant réalisée de manière discontinue par dépôt sur lesdites fibres de renfort ensimées (112) de ladite composition polymère, de manière à obtenir des fibres de renfort imprégnées de manière discontinue (113) comprenant une alternance de parties imprégnées (11') et de parties sèches (12') ;
C) compactage desdites fibres de renfort imprégnées de manière discontinue (113) par passage à travers au moins un œillet de calibration (5), pour obtenir à la sortie dudit œillet de calibration des fibres de carbone calibrées ;
D) cuisson pour polymériser lesdites fibres de renfort préalablement calibrées dans une filière de formage (6), pour obtenir ledit dispositif de renforcement (1) constitué d'une alternance de parties rigides composites (11) et de parties souples (12).

10. Procédé selon la revendication 9, selon lequel le calibrage desdites fibres de renfort et la cuisson D) sont réalisées dans un seul et unique outillage consistant en ladite filière (6) de formage.

11. Procédé selon l'une quelconque des revendications 9 et 10, selon lequel les fibres de renfort (112) obtenues à l'issue de la cuisson ont des extrémités libres (114) présentant un taux d'ensimage qui est sensiblement identique au taux d'ensimage desdites fibres de renfort ensimées (112').

12. Procédé selon l'une quelconque des revendications 10 à 11, comprenant en outre, entre les étapes B) d'imprégnation et C) de compactage, une étape B') d'application d'une couche de protection sur lesdites parties imprégnées (11') et/ou lesdites parties sèches (12') pour les protéger lors du passage C') dans la filière de formage (6).

13. Procédé selon l'une quelconque des revendications 9 à 12, comprenant une étape de coupe en ligne dudit dispositif de renforcement (1).

## Patentansprüche

1. Verstärkungsvorrichtung (1) vom Anker-Typ, umfassend:
- mindestens einen starren Verbundteil (11) von länglicher Form, umfassend ein erstes Ende (110) und ein zweites Ende (111), wobei der starre Verbundteil (11) mindestens ein Bündel kontinuierlicher Verstärkungsfasern (112) und eine Polymermatrix (113), die die Verstärkungsfasern (112) imprägniert und sie miteinander verbindet, umfasst, und
- mindestens einen flexiblen Teil (12), der aus freien Enden (114) der Verstärkungsfasern besteht, wobei sich die freien Enden mindestens über eines des ersten und des zweiten Endes des starren Verbundteils (11) hinaus erstrecken,
wobei die Verstärkungsvorrichtung (1) **dadurch gekennzeichnet ist, dass** der Volumenanteil der Verstärkungsfasern (112) in dem starren Verbundteil (11) mehr als 56 Vol.-% beträgt, und dass die freien Enden der Verstärkungsfasern (112) geschlichtet sind und einen Schlichtegehalt zwischen 0,25 Gew.-% und 2 Gew.-%, und vorzugsweise zwischen 0,3 Gew.-% und 1,5 Gew.-%, der freien Enden (114) der Verstärkungsfasern (112) aufweisen.

2. Verstärkungsvorrichtung (1) nach Anspruch 1, wobei sich die freien Enden (114) der Verstärkungsfasern (112), wenn sie sich unter ihrem Eigengewicht frei entfalten, in einer im Wesentlichen länglichen Form darstellen, die innerhalb der Grenzen eines Fächers umschrieben ist, dessen Öffnung einen Winkel α von höchstens 40° und vorzugsweise zwischen 20° und 40° bildet.

3. Verstärkungsvorrichtung (1) nach einem der Ansprüche 1 und 2, wobei der Volumenanteil der Verstärkungsfasern (112) in dem starren Verbundteil (11) zwischen 60 Vol.-% und 75 Vol.-% liegt.

4. Verstärkungsvorrichtung (1) nach einem der Ansprüche 1 bis 3, wobei die Polymermatrix (113) ein duroplastisches Polymer als Hauptbestandteil der Polymermatrix (113) umfasst.

5. Verstärkungsvorrichtung (1) nach einem der Ansprüche 1 bis 3, wobei die Polymermatrix (113) ein thermoplastisches Polymer als Hauptbestandteil der Polymermatrix (113) umfasst.

6. Verstärkungsvorrichtung (1) nach einem der Ansprüche 1 bis 5, wobei die Verstärkungsfasern (112) Kohlenstofffasern sind.

7. Verstärkungsvorrichtung (1) nach einem der Ansprüche 1 bis 6, umfassend mindestens eine Abwechslung von starren Verbundteilen (11) und flexiblen Teilen (12).

8. Verwendung der Verstärkungsvorrichtung (1) nach einem der Ansprüche 1 bis 7 als Bauwerksverstärkungselement.

9. Verfahren zur Herstellung einer Verstärkungsvorrichtung (1), wie sie in einem der Ansprüche 1 bis 7 definiert ist, wobei das Verfahren die folgenden Schritte umfasst:
A) Abwickeln unter Spannung in Längsrichtung von geschlichteten Verstärkungsfasern (112'), um sie in einer bestimmten Richtung auszurichten; wobei das Abwickeln (100) mittels eines Zugsystems (3) zum kontinuierlichen oder diskontinuierlichen Ziehen der geschlichteten Verstärkungsfasern (112') durchgeführt wird;
B) diskontinuierliches Imprägnieren der geschlichteten Verstärkungsfasern (112') mit einer reaktiven Zusammensetzung (40), die mindestens einen Polymer-Vorläufer umfasst, wobei die Imprägnierung diskontinuierlich durch Auftragen der Polymerzusammensetzung auf die geschlichteten Verstärkungsfasern (112) erfolgt, um diskontinuierlich imprägnierte Verstärkungsfasern (113), die eine Abwechslung von imprägnierten Abschnitten (11') und trockenen Abschnitten (12') umfassen, zu erhalten;
C) Verdichten der diskontinuierlich imprägnierten Verstärkungsfasern (113) durch Durchführen durch mindestens eine Kalibrieröse (5), um am Ausgang der Kalibrieröse kalibrierte Kohlenstofffasern zu erhalten;
D) Aushärten zum Polymerisieren der zuvor kalibrierten Verstärkungsfasern in einer Formdüse (6), um die Verstärkungsvorrichtung (1), bestehend aus einer Abwechslung von starren Verbundteilen (11) und flexiblen Teilen (12), zu erhalten.

10. Verfahren nach Anspruch 9, wobei das Kalibrieren der Verstärkungsfasern und das Aushärten D) in ein und demselben Werkzeug, bestehend aus der Formdüse (6), durchgeführt werden.

11. Verfahren nach einem der Ansprüche 9 und 10, wobei die am Ende des Aushärtens erhaltenen Verstärkungsfasern (112) freie Enden (114) aufweisen, die einen Schlichtegehalt aufweisen, der im Wesentlichen identisch mit dem Schlichtegehalt der geschlichteten Verstärkungsfasern (112') ist.

12. Verfahren nach einem der Ansprüche 10 bis 11, ferner umfassend, zwischen den Schritten B) des Imprägnierens und C) des Verdichtens, einen Schritt B') des Aufbringens einer Schutzschicht auf die imprägnierten Abschnitte (11') und/oder die trockenen Abschnitte (12'), um sie während des Durchgangs C') durch die Formdüse (6) zu schützen.

13. Verfahren nach einem der Ansprüche 9 bis 12, umfassend einen Schritt des Inline-Schneidens der Verstärkungsvorrichtung (1).

## Claims

1. Reinforcement device (1) of anchor type comprising:
- at least one rigid composite part (11) of elongate shape comprising a first end (110) and a second end (111), said rigid composite part (11) comprising at least one bundle of continuous reinforcing fibres (112) and a polymeric matrix (113) impregnating said reinforcing fibres (112) and bonding them together, and
- at least one flexible part (12) constituted by free ends (114) of said reinforcing fibres, said free ends extending at least one of the first and second ends of the rigid composite part (11),
said reinforcement device (1) being **characterised in that** the volume percentage of said reinforcing fibres (112) in said rigid composite part (11) is greater than 56% by volume, and **in that** said free ends of said reinforcing fibres (112) are sized and have a sizing content of between 0.25% and 2% by weight, and preferably between 0.3% and 1.5% by weight, of said free ends (114) of the reinforcing fibres (112).

2. Reinforcement device (1) according to claim 1, wherein said free ends (114) of the reinforcing fibres (112) present, when they deploy freely under their own weight, a substantially elongate shape circumscribed within the limits of a fan whose spread forms an angle α of at most 40° and preferably between 20° and 40°.

3. Reinforcement device (1) according to any one of claims 1 and 2, wherein the volume percentage of said reinforcing fibres (112) in said rigid composite part (11) is between 60% and 75% by volume.

4. Reinforcement device (1) according to any one of claims 1 to 3, wherein said polymeric matrix (113) comprises a thermosetting polymer as the main constituent of said polymeric matrix (113).

5. Reinforcement device (1) according to any one of claims 1 to 3, wherein said polymeric matrix (113) comprises a thermoplastic polymer as the main constituent of said polymeric matrix (113).

6. Reinforcement device (1) according to any one of claims 1 to 5, wherein said reinforcing fibres (112) are carbon fibres.

7. Reinforcement device (1) according to any one of claims 1 to 6, comprising at least one alternation of rigid composite parts (11) and flexible parts (12).

8. Use of the reinforcement device (1) according to any one of claims 1 to 7 as a construction reinforcement element.

9. Method for manufacturing a reinforcement device (1) as defined according to any one of claims 1 to 7, said method comprising the following steps:
A) unwinding under tension in the lengthwise direction of sized reinforcing fibres (112') in order to align them in a determined direction; the unwinding (100) being carried out by means of a traction system (3) for pulling said sized reinforcing fibres (112') continuously or discontinuously;
B) discontinuous impregnation of said sized reinforcing fibres (112') with a reactive composition (40) comprising at least one polymer precursor, said impregnation being carried out discontinuously by depositing said polymer composition on said sized reinforcing fibres (112), so as to obtain discontinuously impregnated reinforcing fibres (113) comprising an alternation of impregnated parts (11') and dry parts (12');
C) compacting said discontinuously impregnated reinforcing fibres (113) by passage through at least one calibration eyelet (5), so as to obtain, at the outlet of said calibration eyelet, calibrated carbon fibres;
D) curing to polymerise said previously calibrated reinforcing fibres in a forming die (6), so as to obtain said reinforcement device (1) consisting of an alternation of rigid composite parts (11) and flexible parts (12).

10. Method according to claim 9, wherein the calibration of said reinforcing fibres and the curing D) are carried out in a single and unique tooling consisting of said forming die (6).

11. Method according to any one of claims 9 and 10, wherein the reinforcing fibres (112) obtained at the end of curing have free ends (114) having a sizing content that is substantially identical to the sizing content of said sized reinforcing fibres (112').

12. Method according to any one of claims 10 to 11, further comprising, between steps B) of impregnation and C) of compacting, a step B') of applying a protective layer on said impregnated parts (11') and/or said dry parts (12') to protect them during the passage C') into the forming die (6).

13. Method according to any one of claims 9 to 12, comprising a step of in-line cutting of said reinforcement device (1).
